(19) Europäisches Patentamt
European Patent Office
Office européen des brevets

(11) **EP 3 090 885 B1**

(12) **EUROPEAN PATENT SPECIFICATION**

(45) Date of publication and mention
of the grant of the patent:
**02.10.2019 Bulletin 2019/40**

(51) Int Cl.:
***B60C 9/02*** *(2006.01)*    ***B60C 9/04*** *(2006.01)*

(21) Application number: **16166934.6**

(22) Date of filing: **25.04.2016**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.05.2015 JP 2015094579**

(43) Date of publication of application:
**09.11.2016 Bulletin 2016/45**

(73) Proprietor: **SUMITOMO RUBBER INDUSTRIES,
LTD.**
**Kobe-shi, Hyogo-ken, 651-0072 (JP)**

(72) Inventor: **Kohara, Kei**
**Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 2 810 792      CA-A- 1 260 812
JP-A- 2008 308 104    JP-A- 2012 106 441
JP-A- 2014 189 128**

## Description

BACKGROUND OF THE INVENTION

Field of the Invention

The present invention relates to a pneumatic tire capable of reducing generation of poor appearance.

Description of the Background Art

For example, Japanese Laid-Open Patent Publication No. 2014-069335 discloses a method for manufacturing a pneumatic tire by use of a rigid core. The rigid core has an outer surface shape that substantially coincides with a shape of a cavity surface of a tire to be manufactured. Strip-shaped sheet-like ply pieces are sequentially adhered to the outer surface of the rigid core in the tire circumferential direction in order to produce a green tire. Thus, a toroidal carcass ply is formed on the outer side of the rigid core. Thereafter, the other tire members are disposed to form a green tire on the outer side of the rigid core. The green tire and the rigid core are vulcanized, whereby a pneumatic tire is manufactured.

The pneumatic tire manufactured by the above-described manufacturing method has carcass cords arranged at uniform intervals and has excellent uniformity, as compared to a conventional tire produced by a manner in which, for example, a green tire obtained by a cylindrical carcass ply being toroidally shaped by dilation deformation is vulcanized.

Each ply piece has a radial length larger than a length in the tire circumferential direction. Each ply piece has a plurality of carcass cords arranged along the longitudinal direction. The carcass cords are arranged so as to be almost equally spaced in the tire circumferential direction.

## SUMMARY OF THE INVENTION

In general, on the outer surface of the rigid core, the length, in the tire circumferential direction, on the tread portion side, is greater than the length, in the tire circumferential direction, on the bead portion sides. In order to absorb such a difference in circumferential length, for example, the ply pieces adjacent to each other in the tire circumferential direction are disposed so as to overlap each other from sidewall portions to the bead portions. In the overlap portions of the ply pieces, the cord density of the carcass cords is relatively increased, and the rigidity of the carcass ply is partially enhanced.

A problem arises that, in such a portion having the enhanced rigidity, dilation of the tire is difficult when the tire is inflated to an internal pressure, and the outer surface of the tire is partially dented to generate a dent.

EP 2 810 792 A1 discloses a pneumatic tire in accordance with the preamble of claim 1.

CA 1 260 812 A teaches a fabric used to manufacture tire plies having a plurality of fabric bodies and at least one splice. Each body is composed by two selvedge portions and a remaining central portion and contains a large number of warp cords arranged side by side and parallel to the selvedge portions and weft yarns interlaced with the warp cords. Each of the selvedge portions has warp cords with a degree of twist at least three times as high as the degree of twist of the warp cords in the central portions.

The present invention is made in view of the aforementioned circumstance, and a main object of the present invention is to provide a pneumatic tire that has a basic structure in which the number Te of twists of a carcass cord disposed on at least one of side edge portions, in the circumferential direction, of a ply piece is greater than the number Tc of twists of a carcass cord disposed at the center portion of the ply piece, to allow reduction of generation of a dent and the like in the outer surface of the tire.

The present invention is directed to a pneumatic tire that includes a carcass having at least one carcass ply that extends from a tread portion through sidewall portions to bead portions. The carcass ply has strip-shaped sheet-like ply pieces arranged in a tire circumferential direction, and each strip-shaped sheet-like ply piece has a radial length greater than a circumferential length in the tire circumferential direction. Each ply piece has a plurality of carcass cords arranged along a longitudinal direction, and the ply piece at least partially overlaps a ply piece adjacent thereto in the tire circumferential direction. Each carcass cord is formed by a plurality of strands being twisted together. Each ply piece is formed such that the number Te of twists of the carcass cords arranged in at least one of side edge portions, in a circumferential direction, of the ply piece is greater than the number Tc of twists of the carcass cords arranged in a center portion of the ply piece. All the carcass cords included in the ply piece have the same thickness.

In accordance with one embodiment, each ply piece is preferably formed such that the number Te of twists of the carcass cords arranged in both the side edge portions, in the circumferential direction, of the ply piece is greater than the number Tc of twists of the carcass cords arranged in the center portion.

In the pneumatic tire of the present invention, a ratio Tc/Te in the number of twists of the carcass cords is preferably 0.80 to 0.95.

In accordance with a further embodiment, an average of the number Te of twists of three carcass cords disposed closest to a side edge of the ply piece is preferably greater than an average of the number Tc of twists of the carcass cords other than the three carcass cords disposed closest to the side edge.

In accordance with a further embodiment, the number Te of twists of the carcass cords disposed in the side edge portion is preferably reduced continuously or stepwise from the side edge toward the center portion in the ply piece.

The pneumatic tire of the present invention includes a carcass having at least one carcass ply that extends from a tread portion through sidewall portions to bead portions. The carcass ply has strip-shaped sheet-like ply pieces arranged in a tire circumferential direction, and each strip-shaped sheet-like ply piece has a radial length greater than a circumferential length in the tire circumferential direction. Each ply piece has a plurality of carcass cords arranged along a longitudinal direction, and the ply piece at least partially overlaps a ply piece that is adjacent thereto in the tire circumferential direction.

Each carcass cord is formed by a plurality of strands being twisted together. Each ply piece is formed such that the number Te of twists of the carcass cords arranged in at least one of side edge portions, in a circumferential direction, of the ply piece is greater than the number Tc of twists of the carcass cords arranged in a center portion of the ply piece. The carcass cord in which the number Te of the twists is great is easily elongated and thus has a low rigidity as compared to the carcass cord in which the number Te of the twists is small.

Therefore, the carcass cords that are relatively easily elongated are disposed in the overlap portion, of the ply piece, in which the cord density is partially increased. Accordingly, rigidity can be prevented from being partially increased in the overlap portion of the ply piece, whereby generation of poor appearance such as dent (recess) can be reduced.

BRIEF DESCRIPTION OF THE DRAWINGS

FIG. 1 is a partial perspective view of a pneumatic tire according to one embodiment;
FIG. 2 is a perspective view of a rigid core for forming a carcass ply;
FIG. 3 is a cross-sectional view of a ply piece according to the embodiment;
FIG. 4 is a partial perspective view of the ply piece shown in FIG. 3;
FIG. 5 is a graph showing a relationship between elongation and load of a carcass cord;
FIG. 6 is a cross-sectional view of a ply piece in which the number of twists of a side edge carcass cord is continuously reduced, according to another embodiment;
FIG. 7 is a cross-sectional view of a ply piece in which the number of twists of a side edge carcass cord is reduced stepwise, according to still another embodiment;
FIG. 8 is a cross-sectional view of a ply piece in which a spacing between side edge carcass cords is greater than a spacing between central carcass cords, according to still another embodiment;
FIG. 9 is a cross-sectional view of a ply piece in which a spacing between side edge carcass cords is reduced continuously from side edges toward a center portion in a ply piece, according to still another embodiment; and
FIG. 10 is a cross-sectional view of a ply piece in which the thickness of a side edge carcass cord is less than the thickness of a center carcass cord, according to still another embodiment.

DESCRIPTION OF THE PREFERRED EMBODIMENTS

Hereinafter, an embodiment of the present invention will be described with reference to the drawings.

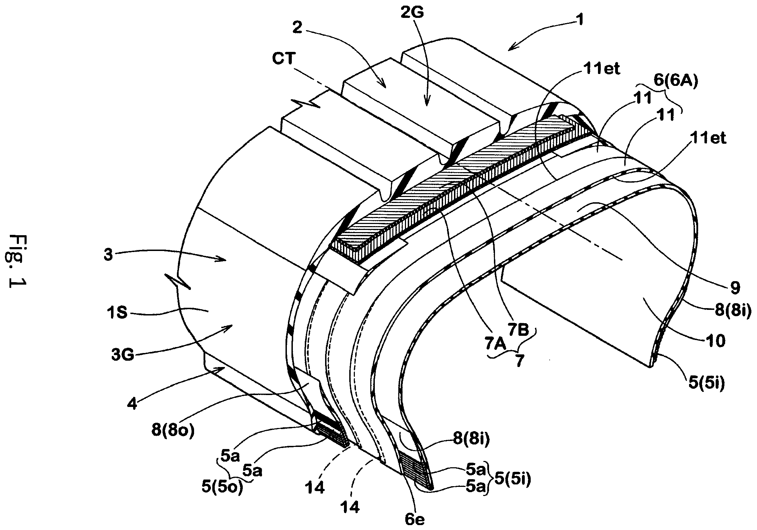

FIG. 1 is a partial perspective view of a pneumatic tire (hereinafter, may be simply referred to as a "tire") 1 of the present embodiment. The tire 1 of the present embodiment is a tire for passenger cars. The tire 1 includes: a carcass 6 that extends from a tread portion 2 through sidewall portions 3 to bead cores 5 of bead portions 4; and a belt layer 7 disposed outward of the carcass 6 and inward of the tread portion 2 in the tire radial direction. Further, an inner liner rubber 9 forming a cavity surface 10 of the tire 1 is disposed inward of the carcass 6.

The carcass 6 includes at least one carcass ply 6A. In the present embodiment, the carcass 6 includes one carcass ply 6A. The carcass ply 6A has carcass cords arranged at, for example, an angle of 75° to 90° relative to the tire equator CT. In the present embodiment, the carcass ply 6A extends between the bead portions 4, 4 from the tread portion 2 through a pair of the sidewall portions 3, 3 so as to form a toroidal shape. In the present embodiment, the carcass ply 6A is not turned up around each bead portion 4 at an inner end 6e in the tire radial direction, and terminated at the inner end 6e. The carcass cords of the present embodiment are formed of an organic fiber (for example, PET (polyethylene terephthalate)). The carcass cords may be steel cords.

Each bead core 5 is disposed on the inner end 6e side of the carcass ply 6A. In the present embodiment, each bead core 5 includes an inner core 5i and an outer core 5o. The inner core 5i is disposed, on the carcass ply 6A, on the inner side in the tire axial direction. The outer core 5o is disposed, on the carcass ply 6A, on the outer side in the tire axial direction. The inner core 5i and the outer core 5o are each formed by one bead wire 5a being spirally wound and overlapped in the tire circumferential direction.

Further, each bead portion 4 has: an inner apex rubber 8i that extends outward from the inner core 5i in the tire radial direction; and an outer apex rubber 8o that extends outward from the outer core 5o in the tire radial direction. The apex rubbers 8i, 8o are formed of a hard rubber.

The belt layer 7 includes two belt plies 7A, 7B. The belt plies 7A, 7B have belt cords arranged at, for example, a small angle of 10° to 35° relative to the tire equator CT. The belt plies 7A, 7B overlap each other such that the belt cord of the belt ply 7A and the belt cord of the belt ply 7B intersect each other in the tire radial direction. For the belt cords, for example, steel cords or organic fiber cords made of an aramid or the like are used.

The inner liner rubber 9 is formed of air-impermeable butyl-based rubber. In the present embodiment, the inner liner rubber 9 extends between the paired bead portions 4, 4 so as to form a toroidal shape and is disposed almost over the entire region of the cavity surface 10.

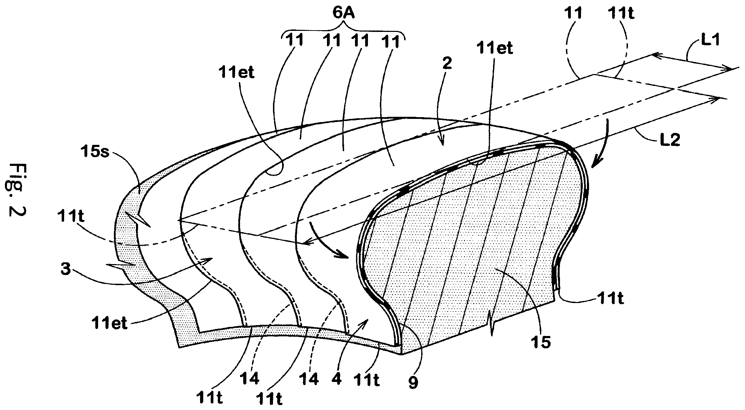

FIG. 2 is a perspective view of a rigid core for forming the carcass ply 6A. In the present embodiment, the tire 1 (carcass ply 6A) is manufactured by using a rigid core 15 having an outer surface 15s that substantially coincide in shape with the cavity surface 10 (shown in FIG. 1) of the tire 1.

In the present embodiment, the carcass ply 6A is formed such that strip-shaped sheet-like ply pieces 11 are arranged in the tire circumferential direction. In the present embodiment, the ply pieces 11 are formed such that a radial length L2 is set to be greater than a circumferential length L1 in the tire circumferential direction. The circumferential length L1 in the tire circumferential direction and the radial length L2 may be determined as appropriate according to, for example, the size of the tire 1 and the like. In the present embodiment, the circumferential length L1 in the tire circumferential direction is set to be, for example, about 24 to 34 mm. Meanwhile, the radial length L2 is set to be, for example, about 300 to 500 mm.

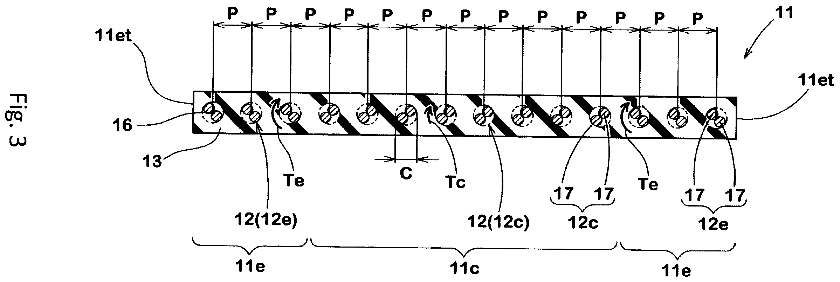

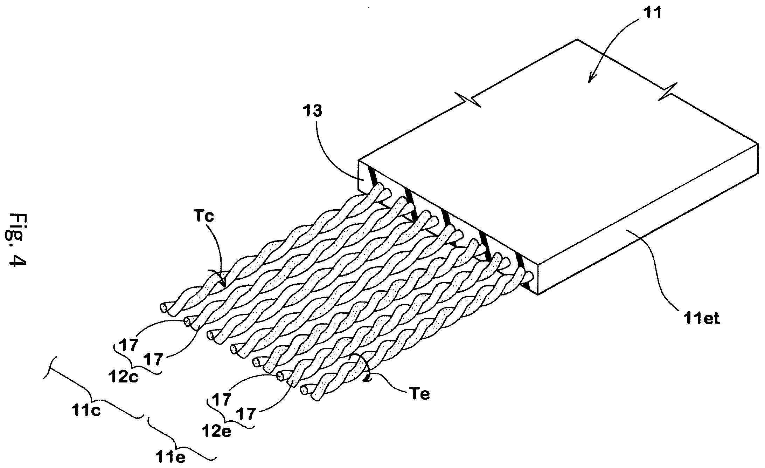

FIG. 3 is a cross-sectional view of the ply piece 11 of the present embodiment. FIG. 4 is a partial perspective view of the ply piece 11 shown in FIG. 3. Each ply piece 11 includes a plurality of carcass cords 12 arranged along the longitudinal direction, and an unvulcanized topping rubber 13 that covers the carcass cords 12. In the description herein, the "unvulcanized" state includes all the states in which completely vulcanized state has not been achieved. Therefore, a so-called semi-vulcanized state is included in the "unvulcanized" states.

In the present embodiment, each carcass cord 12 includes a plurality of strands 17, 17. Each of the strands 17, 17 is subjected to a first twist. These strands 17, 17 are twisted together (subjected to a second twist) into the carcass cord 12.

In the present embodiment, in each carcass cord 12, a direction for the first twist and a direction for the second twist of each of the strands 17, 17 are set to be the same direction. Further, the number of the first twists is set to be the same between the strands 17 and 17. The number of the first twists may be different between the strands 17 and 17.

For the carcass cord 12, the number of the first twists and the number of the second twists are determined as appropriate according to rigidity required for the carcass ply 6A. When the carcass cords 12 are PET (polyethylene terephthalate) cords, the number of the first twists is advantageously set within, for example, a range of 30 to 70 times/10 cm. The number of the second twists is advantageously set within, for example, a range of 30 to 70 times/10 cm.

In the present embodiment, all the carcass cords 12 included in the ply piece 11 have the same thickness C (shown in FIG. 3). The thickness C is determined as appropriate according to the performance required for the tire 1 (shown in FIG. 1). In the description herein, when the carcass cords 12 are cords made of an organic fiber, the thickness of the carcass cord 12 is defined as the total fineness (dtex). When the carcass cords 12 are cords made of PET (polyethylene terephthalate), the thickness (total fineness) of the carcass cord 12 is preferably set to be 2000 to 4500 dtex (3340 dtex in the present embodiment). When the carcass cords 12 are metal cords, the thickness C of the carcass cord 12 is defined as the diameter (mm) of a portion including a wire bundle.

In the present embodiment, the two strands 17, 17 are twisted together into the carcass cord 12. However, the present invention is not limited thereto. For example, three or more strands 17 (not shown) may be twisted together into the carcass cord 12.

In the present embodiment, the ply piece 11 has the carcass cords 12 almost equally spaced from each other in the tire circumferential direction. As shown in FIG. 3, a spacing P in the tire circumferential direction between the carcass cords 12 may be determined as appropriate according to the performance required for the tire 1 (shown in FIG. 1). In the present embodiment, the spacing P is set to be, for example, about 0.8 to 1.8 mm. The spacing P is defined as a distance between cord centers 16, 16 of the carcass cords 12 in a state where the ply pieces 11 have not been adhered to the rigid core 15 (shown in FIG. 2) described below.

As shown in FIG. 2, in the present embodiment, in a process step of forming an unvulcanized green tire (not shown), the strip-shaped sheet-like ply pieces 11 as described above are sequentially adhered to the outer surface 15s of the rigid core 15 in the tire circumferential direction, whereby the carcass ply 6A having a toroidal shape is formed. In the present embodiment, the inner liner rubber 9 is previously disposed between the carcass ply 6A and the rigid core 15. Thereafter, the other tire members are disposed on the outer side of the carcass ply 6A. Thus, a green tire is formed on the outer side of the rigid core 15. The green tire (not shown) and the rigid core 15 are vulcanized, whereby the tire 1 shown in FIG. 1 is manufactured. Thus, in the process of manufacturing the tire 1 according to the present embodiment, in process steps from the formation of the green tire including the carcass ply 6A up to the vulcanization, the carcass ply 6A is not dilated and deformed.

On the outer surface 15s of the rigid core 15, the length, in the tire circumferential direction, on the tread portion 2 side is set to be greater than the length, in the tire circumferential direction, on the bead portion 4 sides. In order to absorb the difference in the circumferential length, each ply piece 11 is disposed so as to at least partially overlap the ply piece 11 that is adjacent thereto in the tire circumferential direction. In the present embodiment, in the ply pieces 11, 11 adjacent to each other in the tire circumferential direction, side edges 11et, 11et on the tread portion 2 side are disposed so as to contact with each other face-to-face while side edges 11et, 11et on radially end portion 11t, 11t sides are disposed so as to overlap each other.

An overlap portion 14 in which the ply pieces 11, 11 overlap each other allows a difference in circumferential length on the rigid core 15 to be absorbed. Therefore, the carcass ply 6A can be formed in a toroidal shape while generation of wrinkles or the like in the carcass ply 6A can be reduced. In the present embodiment, the overlap portion 14 is formed so as to have a substantially triangle shape in the side view.

In the overlap portion 14, the carcass cords 12 (shown in FIG. 3) of the ply pieces 11, 11 adjacent to each other in the tire circumferential direction overlap one another. Thus, in the overlap portions 14, the cord density of the carcass cords 12 is relatively increased as compared to portions other than the overlap portions 14, and the rigidity of the carcass ply 6A is partially enhanced. In the portion (overlap portion 14) having such an enhanced rigidity, when the tire 1 (shown in FIG. 1) is inflated to an internal pressure, the dilation of the tire is difficult, so that an outer surface 1S of the tire 1 may be partially dented to generate a dent. The dent causes poor appearance of the tire 1. In particular, the dent tends to be obviously expressed and outstanding in the outer surfaces of the sidewall portions 3 (shown in FIG. 1) having a small rubber volume.

In the present embodiment, as shown in FIG. 3, the number Te of twists of the carcass cord 12 disposed in at least one of both the side edge portions 11e, 11e, in the circumferential direction, of the ply piece 11, in the present embodiment, in both the side edge portions 11e, 11e, is set to be greater than the number Tc of twists of the carcass cord 12 disposed in a center portion 11c of the ply piece 11. In the description herein, the number Te of twists and the number Tc of twists of the carcass cord 12 are each defined as the number of the second twists of the strands 17, 17.

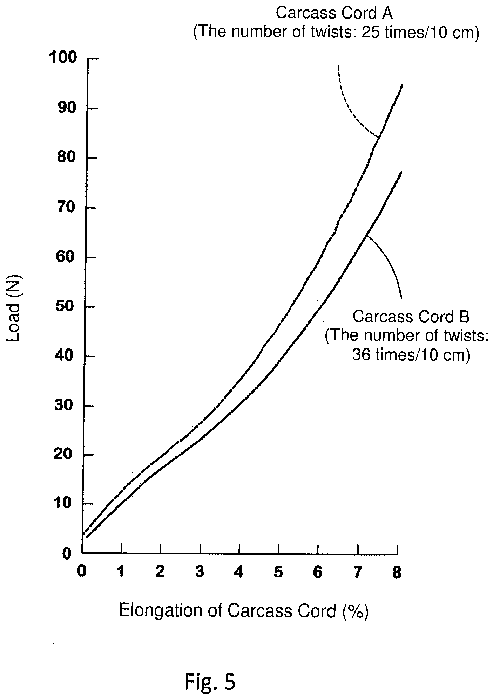

FIG. 5 is a graph showing a relationship between load and elongation of the carcass cords 12. FIG. 5 shows a relationship between elongation and load for a carcass cord A in which the number of twists is 25 times/10 cm, and for a carcass cord B in which the number of twists is 36 times/10 cm. These carcass cords A, B are cords made of PET (polyethylene terephthalate) having a fineness of 1400 dtex/2. As is apparent from the graph, the carcass cord B in which the number of twists is great is easily elongated and thus has a low rigidity as compared to the carcass cord A in which the number of twists is small. Therefore, as shown in FIG. 3, the carcass cords 12 in the side edge portions 11e, 11e in which the number Te of twists is set to be great, are easily elongated and have a low rigidity, as compared to the carcass cords 12 in the center portion 11c in which the number Tc of twists is set to be small.

In the present embodiment, the side edge portion 11e is defined as a region which includes three carcass cords 12 (hereinafter, may be simply referred to as "side edge carcass cords 12e") arranged closest to the side edge 11et in the ply piece 11. The number of the carcass cords 12 corresponding to the side edge carcass cords 12e is not limited to the above-described number. The number of the side edge carcass cords 12e may be determined as appropriate according to, for example, the size, in the tire circumferential direction, of the overlap portion 14 (shown in FIG. 2) or the number of the carcass cords 12 disposed in the overlap portion 14. Further, the center portion 11c is defined as a region which includes the carcass cords 12 (hereinafter, may be simply referred to as "central carcass cords 12c") other than the three side edge carcass cords 12e. A boundary between the side edge portion 11e and the center portion 11c is defined as a mid-position between the side edge carcass cord 12e disposed closest to the center portion 11c, and the central carcass cord 12c disposed closest to the side edge portion 11e.

In the present embodiment, the number Te of twists is the same among the side edge carcass cords 12e. Further, the number Tc of twists is the same among the central carcass cords 12c.

In the above-described ply piece 11, the side edge carcass cords 12e that are relatively easily elongated (the number Te of twists is great), are disposed in the side edge portions 11e, 11e that form the overlap portions 14 (shown in FIG. 2). Thus, in the carcass ply 6A, rigidity can be prevented from being partially enhanced in the overlap portion 14 in which the cord density is partially increased. Therefore, variation in rigidity of the carcass ply 6A between the overlap portions 14 and a portion other than the overlap portions 14 can be reduced. Therefore, when the tire 1 (shown in FIG. 1) is inflated to an internal pressure, the carcass ply 6A can be uniformly dilated. Thus, generation of dent in the outer surface 1S of the tire 1 shown in FIG. 1 can be prevented.

As shown in FIG. 3, in the center portion 11c in which the overlap portion 14 (shown in FIG. 2) is not formed, the central carcass cords 12c in which the number Tc of twists is set to be less than the number Te of twists of the side edge carcass cord 12e are disposed. Therefore, rigidity of the carcass ply 6A is maintained, whereby various performances, of the tire 1, including steering stability performance may not be deteriorated.

As shown in FIG. 2, in the process step of forming the carcass ply 6A, the endmost side edge 11et, in the circumferential direction, of the ply piece 11 and the side edge 11et of the ply piece 11 that is adjacent thereto in the tire circumferential direction are disposed so as to contact with each other face-to-face on the tread portion 2 side. Therefore, since the overlap portion 14 is not formed in the carcass ply 6A on the tread portion 2 side, rigidity is likely to vary in the tire circumferential direction. However, as shown in FIG. 1, the belt plies 7A, 7B and a tread rubber 2G are disposed outward of the carcass ply 6A on the tread portion 2 side in the tire radial direction. Rigidity of the belt plies 7A, 7B is higher than rigidity of the carcass ply 6A. Further, the thickness of the tread rubber 2G is greater than the thickness of a sidewall rubber 3G. Therefore, even when the rigidity of the carcass ply 6A on the tread portion 2 side varies in the tire circumferential direction, dent may not be generated in the outer surface 1S of the tread portion 2.

As shown in FIG. 3, a ratio Tc/Te of the number Tc of twists of the central carcass cord 12c to the number Te of twists of the side edge carcass cord 12e may be determined as appropriate. When the ratio Tc/Te is great, partial enhancement of rigidity in the overlap portion 14 (shown in FIG. 2) may not be sufficiently prevented. Meanwhile, when the ratio Tc/Te is small, rigidity of the overlap portion 14 is reduced, and bulge (dilation) is likely to be generated in a portion in which rigidity of the overlap portion 14 is reduced. In this viewpoint, the ratio Tc/Te is preferably greater than or equal to 0.80 and more preferably greater than or equal to 0.85. The ratio Tc/Te is preferably not greater than 0.95 and more preferably not greater than 0.90.

In the present embodiment, the number Te of twists of the carcass cord 12 disposed in both the side edge portions 11e, 11e, in the circumferential direction, of the ply piece 11 is set to be greater than the number Tc of twists of the carcass cord 12 disposed in the center portion 11c of the ply piece 11. However, the present invention is not limited thereto. For example, the number Te of twists of the carcass cord 12 disposed in at least one of both the side edge portions 11e, 11e, in the circumferential direction, of the ply piece 11 may be set to be greater than the number Tc of twists of the carcass cord 12 disposed in the center portion 11c of the ply piece 11. Also in such a ply piece 11, rigidity in the overlap portion 14 (shown in FIG. 2) having a partially increased cord density can be prevented from being partially enhanced. Therefore, generation of dent in the outer surface 1S of the tire 1 shown in FIG. 1 can be prevented.

In the present embodiment, the number Te of twists is set to be the same among the side edge carcass cords 12e, and the number Tc of twists is set to be the same among the central carcass cords 12c. However, the present invention is not limited thereto. When the average of the number Te of twists for the side edge carcass cords 12e (in the present embodiment, three carcass cords 12 disposed closest to the side edge 11et of the ply piece 11) is set to be greater than the average of the number Tc of twists for the central carcass cords 12c (in the present embodiment, the carcass cords 12 other than the three carcass cords 12 disposed closest to the side edge 11et), the number Te of twists may be different among the side edge carcass cords 12e. Similarly, the number Tc of twists may be different among the central carcass cords 12c. Also in such a case, rigidity of the overlap portion 14 can be prevented from being partially enhanced.

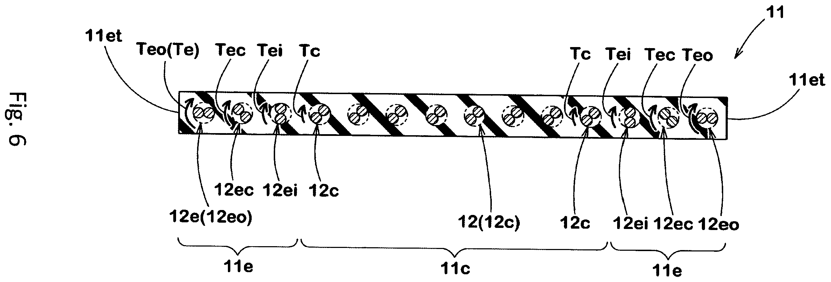

As shown in FIG. 2, each overlap portion 14 of the present embodiment is formed so as to have a substantially triangle shape in the side view. Therefore, as shown in FIG. 3, among the side edge carcass cords 12e, the side edge carcass cords 12e disposed on the center portion 11c side are less likely to be disposed in the overlap portion 14 (shown in FIG. 2) than the side edge carcass cords 12e disposed on the side edge 11et side. Therefore, the number Te of twists of the side edge carcass cord 12e is preferably reduced continuously or stepwise from the side edges 11et toward the center portion 11c in the ply piece 11. FIG. 6 is a cross-sectional view of a ply piece 11 according to another embodiment of the present invention.

In the present embodiment, the number Te of twists is different among the side edge carcass cords 12e in the side edge portion 11e. In the present embodiment, the side edge carcass cords 12e include: a first side edge carcass cord 12eo disposed closest to the side edge 11et; a second side edge carcass cord 12ec disposed closer to the center portion 11c than the first side edge carcass cord 12eo is; and a third side edge carcass cord 12ei disposed closer to the center portion 11c than the second side edge carcass cord 12ec is.

The number Teo of twists of the first side edge carcass cord 12eo, the number Tec of twists of the second side edge carcass cord 12ec, the number Tei of twists of the third side edge carcass cord 12ei, and the number Tc of twists of the central carcass cord 12c satisfy the following relationship (1). That is, the number Te of twists of the side edge carcass cord 12e is reduced continuously from the side edges 11et toward the center portion 11c in the ply piece 11.

$$Teo > Tec > Tei > Tc \quad \cdots \quad (1)$$

In the above-described ply piece 11, the number Te of twists of the side edge carcass cord 12e disposed on the center portion 11c side can be relatively reduced as compared to the number Te of twists of the side edge carcass cord 12e disposed on the side edge 11et side. Thus, variation in rigidity of the carcass ply 6A between a portion in which the overlap portion 14 (shown in FIG. 2) is formed and a portion in which the overlap portion 14 is not formed, can be effectively reduced. Therefore, when the tire 1 (shown in FIG. 1) is inflated to an internal pressure, the carcass ply 6A can be uniformly dilated. Also in the present embodiment, a ratio Tc/Te of the average of the number Tc of twists for the central carcass cords 12c relative to the average of the number Te of twists for the side edge carcass cords 12e (the first side edge carcass cord 12eo, the second side edge carcass cord 12ec, and the third side edge carcass cord 12ei) is preferably set to be within the above-described range (0.80 to 0.95).

Each of the number Tec of twists of the second side edge carcass cord 12ec and the number Tei of twists of the third side edge carcass cord 12ei is preferably set to be 0.85 to 0.98 times the number Te of twists (the number Teo, Tec, Tei of twists) of the side edge carcass cord 12e, on the side edge 11et side, adjacent thereto. Thus, the number Te of twists of the side edge carcass cord 12e can be smoothly reduced gradually from the side edges 11et toward the center portion 11c in the ply piece 11. Therefore, variation in rigidity of the side edge portion 11e can be effectively prevented, and poor appearance of the tire 1 can be prevented.

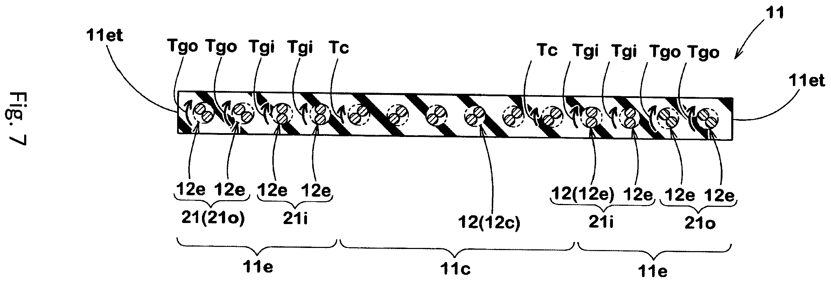

FIG. 7 is a cross-sectional view of a ply piece 11 according to still another embodiment of the present invention. In the present embodiment, in the ply piece 11, for example, the side edge carcass cords 12e are formed by four carcass cords 12 disposed closest to the side edge 11et of the ply piece 11. For example, in the side edge carcass cords 12e, side edge carcass cord groups 21 each having a set of two side edge carcass cords 12e, 12e that are disposed adjacent to each other in the width direction of the ply piece 11 and that have the same number Te of twists, are defined. In the present embodiment, the side edge carcass cord groups 21 include: an outer side edge carcass cord group 21o disposed closest to the side edge 11et; and an inner side edge carcass cord group 21i that is disposed closer to the center portion 11c than the outer side edge carcass cord group 21o is.

The number Tgo of twists of each side edge carcass cord 12e in the outer side edge carcass cord group 21o, the number Tgi of twists of each side edge carcass cord 12e in the inner side edge carcass cord group 21i, and the number Tc of twists of the central carcass cord 12c satisfy the following relationship (2). That is, the number Te of twists of the side edge carcass cord 12e is reduced stepwise from the side edges 11et toward the center portion 11c in the ply piece 11.

$$Tgo > Tgi > Tc \quad \cdots \quad (2)$$

In the above-described ply piece 11, the number Tgi of twists of each side edge carcass cord 12e in the inner side edge carcass cord group 21i can be relatively reduced as compared to the number Tgo of twists of each side edge carcass cord 12e in the outer side edge carcass cord group 21o. Thus, variation in rigidity of the carcass ply 6A between the portion in which the overlap portion 14 (shown in FIG. 2) is formed and the portion in which the overlap portion 14 is not formed, can be reduced. Furthermore, in the present embodiment, the kinds of the side edge carcass cords 12e among which the number Te of twists is different can be reduced as compared to the ply piece 11 in which the number Te of twists of the side edge carcass cord 12e is continuously reduced as shown in FIG. 6, whereby the kinds of the side edge carcass cords 12e can be minimized and the production cost can be reduced. A ratio Tgi/Tgo of the number Tgi of twists of each side edge carcass cord 12e in the inner side edge carcass cord group 21i relative to the number Tgo of twists of each side edge carcass cord 12e in the outer side edge carcass cord group 21o is preferably set to be 0.85 to 0.98.

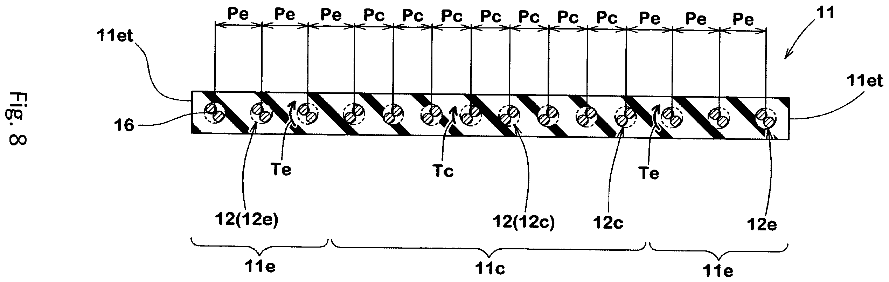

In the ply piece 11 of each of the above-described embodiments, a spacing P between the carcass cords 12 is set to be uniform. However, the present invention is not limited thereto. When the number Te of twists of the side edge carcass cord 12e is set to be greater than the number Tc of twists of the central carcass cord 12c, different spacings P may be used. FIG. 8 is a cross-sectional view of a ply piece 11 according to still another embodiment of the present invention.

In the present embodiment, in the ply piece 11, a spacing Pe between the side edge carcass cords 12e disposed in at least one of both the side edge portions 11e, 11e, in the present embodiment, both of the side edge portions 11e, 11e, is set to be greater than a spacing Pc between the central carcass cords 12c. In the present embodiment, the same spacing Pe is set for each of the side edge carcass cords 12e. Further, the same spacing Pc is set for each of the central carcass cords 12c.

In the above-described ply piece 11, the cord density of each of the side edge portions 11e, 11e can be relatively reduced. Therefore, increase of the cord density in the overlap portion 14 (shown in FIG. 2) can be prevented. Furthermore, in the side edge portions 11e, 11e, the side edge carcass cords 12e that are relatively easily elongated (the number Te of twists is great) are disposed. Thus, in the carcass ply 6A, variation in rigidity of the carcass ply 6A (shown in FIG. 2) between the portion in which the overlap portion 14 is formed and the portion in which the overlap portion 14 is not formed, can be effectively reduced. Therefore, generation of dent in the outer surface 1S of the tire 1 shown in FIG. 1 can be prevented. Further, the spacing Pc for each of the central carcass cords 12c of the center portion 11c in which the overlap portion 14 is not formed is set to be less than the spacing Pe for each of the side edge carcass cords 12e. Therefore, various performances, of the tire 1, including steering stability performance may not be deteriorated.

As described above, in the tread portion 2 in which the endmost side edge 11et, in the circumferential direction, of the ply piece 11 and the side edge 11et of the ply piece 11 adjacent thereto in the tire circumferential direction are disposed so as to contact with each other face-to-face, the overlap portion 14 is not formed. Therefore, in the tread portion 2, the spacing P varies among the carcass cords 12 in the tire circumferential direction. However, the tread portion 2 has the belt plies7A, 7B, and the tread rubber disposed outward of the carcass ply 6A in the tire radial direction. Therefore, poor appearance of the tire 1 such as dent or bulge may not be generated.

In order to effectively exhibit the above-described effect, a ratio Pc/Pe of the spacing Pc for the central carcass cords 12c to the spacing Pe for the side edge carcass cords 12e is preferably set to be 0.50 to 0.83. When the ratio Pc/Pe is greater than 0.83, increase of the cord density of the overlap portion 14 may not be sufficiently prevented. Meanwhile, when the ratio Pc/Pe is less than 0.50, the cord density of the overlap portion 14 is reduced, and bulge (dilation) is likely to be generated in the portion in which the cord density of the overlap portion 14 is reduced. In this viewpoint, the ratio Pe/Pc is more preferably greater than or equal to 0.60 and more preferably not greater than 0.75.

In the present embodiment, the spacing Pe is set to be the same for each of the side edge carcass cords 12e, and the spacing Pc is set to be the same for each of the central carcass cords 12c. However, the present invention is not limited thereto. For example, when the average of the spacings Pe for the side edge carcass cords 12e (in the present embodiment, three carcass cords 12 disposed closest to the side edge 11et of the ply piece 11) is set to be greater than the average of the spacings Pc for the central carcass cords 12c (in the present embodiment, carcass cords other than the three carcass cords 12 disposed closest to the side edge 11et), the spacing Pe may be different among the side edge carcass cords 12e. Further, the spacing Pc may be different among the central carcass cords 12c. Also in such a case, rigidity of the overlap portion 14 can be prevented from being partially enhanced.

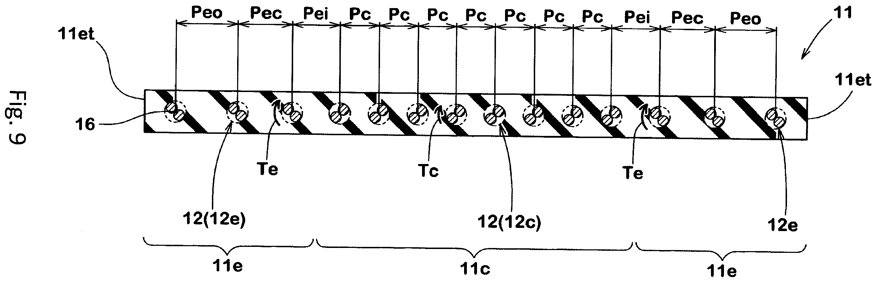

As described above, among the side edge carcass cords 12e, the side edge carcass cord 12e disposed on the center portion 11c side is less likely to be disposed in the overlap portion 14 (shown in FIG. 2) than the side edge carcass cord 12e disposed on the side edge 11et side is. Therefore, the spacing Pe for the side edge carcass cord 12e is preferably reduced continuously or stepwise (in the present embodiment, continuously) from the side edges 11et toward the center portion 11c in the ply piece 11. FIG. 9 is a cross-sectional view of a ply piece 11 according to still another embodiment of the present invention.

In the present embodiment, the spacings Pe (a first spacing Peo, a second spacing Pec, a third spacing Pei in order, respectively, from the side edge 11et) for the side edge carcass cords 12e, and the spacing Pc for the central carcass cords 12c satisfy the following relationship (3).

$$\text{Peo} > \text{Pcc} > \text{Pei} > \text{Pc} \quad \cdots \quad (3)$$

In the above-described ply piece 11, the cord density of the side edge portions 11e, 11e can be gradually reduced from the side edges 11et toward the center portion 11c. Thus, in the side edge portion 11e, variation in cord density of the carcass cord 12 between the overlap portion 14 (shown in FIG. 2), and a portion other than the overlap portion 14 can be effectively prevented. Therefore, when the tire 1 (shown in FIG. 1) is inflated to an internal pressure, the carcass ply 6A can be uniformly dilated. The average of the spacings Pc for the central carcass cords 12c is preferably set to be 0.50 to 0.83 times the average of the spacings Pe for the side edge carcass cords 12e.

The spacing for each of the carcass cords 12 (the second spacing Pec and the third spacing Pei for the side edge carcass cords 12e, or the spacing Pc for the central carcass cord 12c) is preferably set to be 0.83 to 0.90 times the spacing Pe (the first spacing Peo, the second spacing Pec, or the third spacing Pei) for the side edge carcass cord 12e, on the side edge 11et side, adjacent thereto. Thus, the spacing Pe for the side edge carcass cord 12e can be smoothly reduced gradually from the side edges 11et toward the center portion 11c in the ply piece 11. Therefore, variation in cord density of the carcass cord 12 can be effectively prevented. Therefore, poor appearance of the tire 1 can be effectively prevented.

In the present embodiment, the spacing Pe for the side edge carcass cord 12e is continuously reduced from the side edges 11et toward the center portion 11c in the ply piece 11. However, the present invention is not limited thereto. For example, the spacing Pe for the side edge carcass cord 12e may be reduced stepwise from the side edges 11et toward the center portion 11c in the ply piece 11. In this case, the spacing Pe for the side edge carcass cords 12e is preferably reduced stepwise in units of the side edge carcass cord group 21 (shown in FIG. 7).

Further, the spacing Pe for the side edge carcass cords 12e satisfies the above-described relationship (3), and further the number Teo, Tec, and Tei of twists of the side edge carcass cords 12 and the number Tc of twists of the central carcass cord 12c as shown in FIG. 6 may also satisfy the above-described relationship (1). Thus, both the spacing Pe and the number Te of twists for the side edge carcass cord 12e can be smoothly reduced gradually from the side edges 11et toward the center portion 11c in the ply piece 11. Therefore, variation in cord density of the carcass cord 12 can be prevented with an enhanced effectiveness.

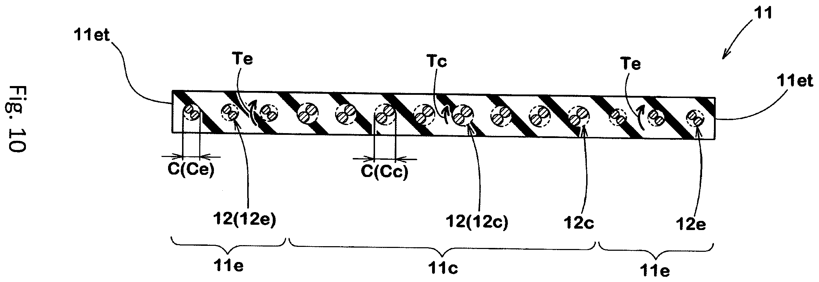

In the above-described embodiments, the side edge carcass cords 12e and the central carcass cords 12c have the same thickness C. However, the present invention is not limited thereto. FIG. 10 is a cross-sectional view of a ply piece 11 according to still another embodiment of the present invention. As shown in FIG. 10, a thickness Ce of the side edge carcass cord 12e may be set to be less than a thickness Cc of the central carcass cord 12c.

In the above-described ply piece 11, while the number Te of twists of the side edge carcass cord 12e can be relatively increased, the thickness Ce of the side edge carcass cord 12e can be relatively reduced. Therefore, rigidity of the side edge carcass cord 12e can be relatively reduced. Furthermore, the side edge carcass cords 12e that are relatively easily elongated (the number Te of twists is great) are disposed in the side edge portions 11e, 11e. Thus, in the carcass ply 6A, variation in rigidity of the carcass ply 6A (shown in FIG. 2) between a porton in which the overlap portion 14 is formed, and a portion in which the overlap portion 14 is not formed, can be effectively reduced. Therefore, generation of poor appearance such as dent or bulge in the outer surface 1S of the tire 1 shown in FIG. 1 can be prevented.

Further, the central carcass cord 12c of the center portion 11c in which the overlap portion 14 is not formed, has the thickness Cc that is greater than the thickness Ce of the side edge carcass cord 12e. Therefore, various performances, of the tire 1, including steering stability performance may not be deteriorated. In this case, a ratio Cc/Ce of the thickness Cc of the central carcass cord 12c to the thickness Ce of the side edge carcass cord 12e is preferably set to be 1.2 to 2.0.

Although the preferred embodiments of the present invention have been described above in detail, the present invention is not limited to the above embodiments shown in the drawings, and various modifications can be made to practice the present invention.

[Examples]

[Example A]

A tire having the basic structure shown in FIG. 1 and having the ply pieces indicated in Table 1 was produced, and the performance of the tire was tested (Examples 1 to 8). In Examples 1 to 8, the number of twists of the side edge carcass cord was set to be greater than the number of twists of the central carcass cord. Furthermore, in the tire of Example 8, the number Te of twists of the side edge carcass cord was reduced continuously toward the center portion.

Furthermore, for comparison, conventional tires (Comparative examples 1 to 3) each having the ply pieces in which the number of twists was the same among the carcass cords, and tires (Comparative examples 4 to 7) each having the ply pieces in which the number of twists of the side edge carcass cord was less than the number of twists of the central carcass cord, were similarly tested.

The common specifications were as follows. In each of examples and comparative examples, the spacing P was set to be the same for each of the carcass cords. In Example 8 in Table 1, "the number of twists of carcass cord in side edge portion" represents an average value of the number Teo of twists of the first side edge carcass cord, the number Tec of twists of the second side edge carcass cord, and the number Tei of twists of the third side edge carcass cord.

Tire size: 195/65R15
Rim size: 15×6J
Thickness of sidewall portion: 1.5 mm
Ply piece:

Circumferential length L1 in tire circumferential direction: 28 mm
Radial length L2: 390 mm

Carcass cord:

Material of cord: PET (polyethylene terephthalate)
Structure: 1670 dtex/2
Spacing P: 1.3 mm
The number of carcass cords in side edge portion: Three

The test method was as follows.

<Appearance of tire>

Each test tire was mounted on the rim, and was inflated to an internal pressure of 300 kPa. It was checked whether or not poor appearance such as dent was found from the sidewall portions toward the bead portions, to evaluate appearance of the tire. The evaluation result was as follows. S, A, B, C, and D represent levels at which there is no problem in the marketplace.

S: Poor appearance was not found at all.
A: Poor appearance was found only when the sidewall portion was carefully touched.
B: Poor appearance was found only when the sidewall portion was touched.
C: Although poor appearance was not found when the sidewall portion was visually checked, poor appearance was relatively easily found when the sidewall portion was touched.
D: Poor appearance was found only when visual checking of the sidewall portion was carefully performed.
E: Poor appearance was found when the sidewall portion was visually checked.
F: Poor appearance was easily found when the sidewall portion was visually checked.

The results of the test are indicated in Table 1

EP 3 090 885 B1

[Table 1]

| | Comparative example 1 | Comparative example 2 | Comparative example 3 | Comparative example 4 | Comparative example 5 | Comparative example 6 | Comparative example 7 | Example 1 | Example 2 |
|---|---|---|---|---|---|---|---|---|---|
| Cross-sectional view of ply piece | - | - | - | - | - | - | - | FIG. 3 | FIG. 3 |
| Side edge portion having side edge carcass cords such that the number Te of twists of side edge carcass cord is greater than the number Tc of twists of central carcass cord | None | None | None | - | - | - | - | Provided on both sides | Provided on both sides |
| Side edge portion having side edge carcass cords such that the number Te of twists of side edge carcass cord is less than the number Tc of twists of central carcass cord | - | - | - | Provided on both sides | Provided on both sides | Provided on both sides | Provided on both sides | - | - |
| The number of twists of each carcass cord (times/10 cm) | 45 | 40 | 35 | - | - | - | - | - | - |
| The number Te of twists of side edge carcass cord (times/10 cm) | - | - | - | 40 | 35 | 30 | 35 | 45 | 50 |
| The number Tc of twists of central carcass cord (times/10 cm) | - | - | - | 45 | 45 | 40 | 40 | 40 | 40 |
| Tc/Te | - | - | - | 1.13 | 1.29 | 1.33 | 1.14 | 0.89 | 0.80 |
| The number Teo of twists of first side edge carcass cord (times/10 cm) | - | - | - | - | - | - | - | - | - |
| The number Tec of twists of second side edge carcass cord (times/10 cm) | - | - | - | - | - | - | - | - | - |
| The number Tei of twists of third side edge carcass cord (times/10 cm) | - | - | - | - | - | - | - | - | - |
| Appearance of tire (score) [S, A, B, C, and D each represent good score] | D | D | D | E | E | F | E | S | S |

11

|  | Example 3 | Example 4 | Example 5 | Example 6 | Example 7 | Example 8 |
|---|---|---|---|---|---|---|
| Cross-sectional view of ply piece | FIG. 3 | FIG. 3 | FIG. 3 | FIG. 3 | FIG. 3 | FIG. 6 |
| Side edge portion having side edge carcass cords such that the number Te of twists of side edge carcass cord is greater than the number Tc of twists of central carcass cord | Provided on both sides | Provided on both sides | Provided on both sides | Provided on both sides | Provided on one side | Provided on both sides |
| Side edge portion having side edge carcass cords such that the number Te of twists of side edge carcass cord is less than the number Tc of twists of central carcass cord | - | - | - | - | - | - |
| The number of twists of each carcass cord (times/10 cm) | - | - | - | - | - | - |
| The number Te of twists of side edge carcass cord (times/10 cm) | 42 | 60 | 50 | 40 | 45 | 43 |
| The number Tc of twists of central carcass cord (times/10 cm) | 40 | 40 | 35 | 35 | 40 | 40 |
| Tc/Te | 0.95 | 0.67 | 0.70 | 0.88 | 0.89 | 0.93 |
| The number Teo of twists of first side edge carcass cord (times/10 cm) | - | - | - | - | - | 45 |
| The number Tec of twists of second side edge carcass cord (times/10 cm) | - | - | - | - | - | 43 |
| The number Tei of twists of third side edge carcass cord (times/10 cm) | - | - | - | - | - | 41 |
| Appearance of tire (score) [S, A, B, C, and D each represent good score] | A | C | C | S | A | S |

According to the results of the test, it can be confirmed that generation of poor appearance can be reduced in the tires of examples as compared to the tires of comparative examples.

[Example B]

A tire having the basic structure shown in FIG. 1 and having the ply pieces indicated in Table 2 was produced,

12

and the performance of the tire was tested (Example 5, Example 9, and Example 10). In the tire of Example 10, the spacing Pe for the carcass cords in the side edge portion was reduced gradually from the side edges toward the center portion in the ply piece. The common specifications were the same as those for Example A except for the spacing P for the carcass cords. In Example 10 in Table 2, "spacing Pe for carcass cords in side edge portion" represents an average value of the first spacing Peo, the second spacing Pec, and the third spacing Pei. The test method was the same as that for Example A.

The results of the test are indicated in Table 2.

[Table 2]

| | Example 5 | Example 9 | Example 10 |
|---|---|---|---|
| Cross-sectional view of ply piece | FIG. 3 | FIG. 8 | FIG. 9 |
| Side edge portion having side edge carcass cords such that the number Te of twists of side edge carcass cord is greater than the number Tc of twists of central carcass cord | Provided on both sides | Provided on both sides | Provided on both sides |
| The number Te of twists of side edge carcass cord (times/10 cm) | 50 | 50 | 50 |
| The number Tc of twists of central carcass cord (times/10 cm) | 35 | 35 | 35 |
| Tc/Te | 0.70 | 0.70 | 0.70 |
| Spacing P (mm) for all carcass cords | 1.3 | - | - |
| Spacing Pc (mm) for carcass cords in center portion | - | 1.24 | 1.24 |
| Spacing Pe (mm) for carcass cords in side edge portion | - | 1.54 | 1.44 |
| Pc/Pe | - | 0.81 | 0.86 |
| First spacing Peo (mm) for carcass cord in side edge portion | - | - | 1.54 |
| Second spacing Pec (mm) for carcass cord in side edge portion | - | - | 1.44 |
| Third spacing Pei (mm) for carcass cord in side edge portion | - | - | 1.34 |
| Appearance of tire (score) [S, A, B, C, and D each represent good score] | C | B | A |

According to the results of the test, it can be confirmed that generation of poor appearance can be effectively reduced in the tires (Example 9, Example 10) having the ply pieces in which the spacing Pe for the carcass cords in the side edge portion is greater than the spacing Pc for the carcass cords in the center portion, as compared to the tire (Example 5) having the ply pieces in which the spacing P are set to be the same among all the carcass cords.

**Claims**

1. A pneumatic tire (1) comprising a carcass (6) having at least one carcass ply (6A) that extends from a tread portion (2) through sidewall portions (3) to bead portions (4), wherein

   the carcass ply (6A) has strip-shaped sheet-like ply pieces (11) arranged in a tire circumferential direction, and each strip-shaped sheet-like ply piece (11) has a radial length (L2) greater than a circumferential length (L1) in the tire circumferential direction,

   each ply piece (11) has a plurality of carcass cords (12) arranged along a longitudinal direction, and the ply piece (11) at least partially overlaps a ply piece (11) that is adjacent thereto in the tire circumferential direction,

   each carcass cord (12) is formed by a plurality of strands (17) being twisted together,

   each ply piece (11) is formed such that the number (Te) of twists of the carcass cords (12) arranged in at least one of side edge portions (11e), in a circumferential direction, of the ply piece (11) is greater than the number (Tc) of twists of the carcass cords (12) arranged in a center portion (11c) of the ply piece (11), wherein all the carcass cords (12) included in the ply piece (11) have the same thickness (C), **characterized in that**

   a ratio (Tc/Te) in the number of twists of the carcass cords (12) is 0.80 to 0.95.

**2.** The pneumatic tire (1) according to claim 1, wherein each ply piece (11) is formed such that the number (Te) of twists of the carcass cords (12) arranged in both the side edge portions (11e), in the circumferential direction, of the ply piece (11) is greater than the number (Tc) of twists of the carcass cords (12) arranged in the center portion (11c).

**3.** The pneumatic tire (1) according to claim 1 or claim 2, wherein an average of the number (Te) of twists of three carcass cords (12) disposed closest to a side edge (11et) of the ply piece (11) is greater than an average of the number (Tc) of twists of the carcass cords (12) other than the three carcass cords (12) disposed closest to the side edge (11et).

**4.** The pneumatic tire (1) according to any one of claims 1 to 3, wherein the number (Te) of twists of the carcass cords (12) disposed in the side edge portion (11e) is reduced continuously or stepwise from the side edge (11et) toward the center portion (11c) in the ply piece (11).

**Patentansprüche**

**1.** Luftreifen (1), der eine Karkasse (6) mit zumindest einer Karkassenlage (6A) umfasst, die sich von einem Laufflächenabschnitt (2) über Seitenwandabschnitte (3) bis zu Wulstabschnitten (4) erstreckt, wobei

die Karkassenlage (6A) streifenförmige blattartige Lagenteile (11) aufweist, die in einer Umfangsrichtung des Reifens angeordnet sind, und jedes streifenförmige blattartige Lagenteil (11) eine radiale Länge (L2) aufweist, die größer als eine Umfangslänge (L1) in der Umfangsrichtung des Reifens ist,
jedes Lagenteil (11) mehrere Karkassenkorde (12) aufweist, die entlang einer Längsrichtung angeordnet sind, und das Lagenteil (11) ein Lagenteil (11) zumindest teilweise überlagert, das zu diesem in der Umfangsrichtung des Reifens benachbart ist,
jeder Karkassenkord (12) durch mehrere Stränge (17) gebildet ist, die zusammengewunden sind,
jedes Lagenteil (11) derart gebildet ist, dass die Anzahl (Te) von Windungen der Karkassenkorde (12), die in zumindest einem von Seitenrandabschnitten (11e) in einer Umfangsrichtung des Lagenteils (11) angeordnet sind, größer als die Anzahl (Tc) von Windungen der Karkassenkorde (12) ist, die in einem zentralen Abschnitt (11c) des Lagenteils (11) angeordnet sind, wobei alle Karkassenkorde (12) in dem Lagenteil (11) die gleiche Dicke (C) aufweisen,
**dadurch gekennzeichnet, dass**
ein Verhältnis (Tc/Te) der Anzahl von Windungen der Karkassenkorde (12) 0,80 bis 0,95 beträgt.

**2.** Luftreifen (1) nach Anspruch 1, wobei jede Karkassenlage (11) derart gebildet ist, dass die Anzahl (Te) von Windungen der Karkassenkorde (12), die in beiden Seitenrandabschnitten (11e) in der Umfangsrichtung des Lagenteils (11) angeordnet sind, größer als die Anzahl (Tc) von Windungen der Karkassenkorde (12) ist, die in dem zentralen Abschnitt (11c) angeordnet sind.

**3.** Luftreifen (1) nach Anspruch 1 oder 2, wobei ein Mittelwert der Anzahl (Te) von Windungen dreier Karkassenkorde (12), die am nächsten an einem Seitenrand (11et) des Lagenteils (11) angeordnet sind, größer als ein Mittelwert der Anzahl (Tc) von Windungen der Karkassenkorde (12) außer den drei Karkassenkorden (12) ist, die am nächsten an dem Seitenrand (11et) angeordnet sind.

**4.** Luftreifen (1) nach einem der Ansprüche 1 bis 3, wobei die Anzahl (Te) von Windungen der Karkassenkorde (12), die in dem Seitenrandabschnitt (11e) angeordnet sind, in dem Lagenteil (11) kontinuierlich oder schrittweise von dem Seitenrand (11et) in Richtung des zentralen Abschnitts (11c) verringert ist.

**Revendications**

**1.** Bandage pneumatique (1) comprenant une carcasse (6) ayant au moins une nappe de carcasse (6A) qui s'étend depuis une portion formant bande de roulement (2) à travers des portions formant paroi latérale (3) jusqu'à des portions formant talon (4), dans lequel
la nappe de carcasse (6A) a des pièces de nappe similaires à une feuille en forme de bande (11) agencées dans une direction circonférentielle du pneumatique, et chaque pièce de nappe similaire à une feuille en forme de bande (11) a une longueur radiale (L2) supérieure à une longueur circonférentielle (L1) dans la direction circonférentielle du pneumatique,

chaque pièce de nappe (11) a une pluralité de câblés de carcasse (12) agencés le long d'une direction longitudinale, et la pièce de nappe (11) recouvre au moins partiellement une pièce de nappe (11) qui est adjacente à celle-ci dans la direction circonférentielle du pneumatique,

chaque câblé de carcasse (12) est formé par une pluralité de cordons (17) qui sont torsadés les uns avec les autres, chaque pièce de nappe (11) est formée de sorte que le nombre (Te) de torsades des câblés de carcasse (12) agencés dans au moins une des portions formant bord latéral (11e), dans une direction circonférentielle, de la pièce de nappe (11) est supérieur au nombre (Tc) de torsades des câblés de carcasse (12) agencés dans une portion centrale (11 c) de la pièce de nappe (11), dans lequel tous les câblés de carcasse (12) inclus dans la pièce de nappe (11) ont la même épaisseur (C),

**caractérisé en ce que**

un rapport (Tc/Te) dans le nombre de torsades des câblés de carcasse (12) est 0,80 à 0,95.

2. Bandage pneumatique (1) selon la revendication 1, dans lequel chaque pièce de nappe (11) est formée de sorte que le nombre (Te) de torsades des câblés de carcasse (12) agencés dans les deux portions formant bord latéral (11e), dans la direction circonférentielle, de la pièce de nappe (11) est supérieur au nombre (Tc) de torsades des câblés de carcasse (12) agencés dans la portion centrale (11c).

3. Bandage pneumatique (1) selon la revendication 1 ou 2, dans lequel une moyenne du nombre (Te) de torsades des trois câblés de carcasse (12) disposés le plus près d'un bord latéral (11et) de la pièce de nappe (11) est supérieure à une moyenne du nombre (Tc) de torsades des câblés de carcasse (12) autres que les trois câblés de carcasse (12) disposés le plus près du bord latéral (11 et).

4. Bandage pneumatique (1) selon l'une quelconque des revendications 1 à 3, dans lequel le nombre (Te) de torsades des cordons de carcasse (12) disposés dans la portion formant bord latéral (11e) est réduit en continu ou par paliers depuis le bord latéral (11et) en direction de la portion centrale (11c) dans la pièce de nappe (11).

Fig. 1

Fig. 2

Fig. 3

Fig. 4

Carcass Cord A
(The number of twists: 25 times/10 cm)

Carcass Cord B
(The number of twists:
36 times/10 cm)

Load (N)

Elongation of Carcass Cord (%)

Fig. 5

Fig. 6

EP 3 090 885 B1

Fig. 7

EP 3 090 885 B1

Fig. 8

Fig. 9

EP 3 090 885 B1

EP 3 090 885 B1

Fig. 10

25

**EP 3 090 885 B1**

**Patent documents cited in the description**

- JP 2014069335 A
- EP 2810792 A1
- CA 1260812 A